# EUROPÄISCHE PATENTSCHRIFT

(11) **EP 1 024 351 B1**
(45) Veröffentlichungstag und Bekanntmachung des Hinweises auf die Patenterteilung: **01.12.2004**
(21) Anmeldenummer: 00101826.6
(22) Anmeldetag: 29.01.2000
(51) Int. Cl.: G01N 29/22, G01B 17/02, G01M 3/24

(54) **Verfahren und Einrichtung zum Prüfen eines flüssigkeitsgefüllten Behälters**
Method and device for testing a fluid filled tank
Méthode et dispositif pour tester un récipient rempli de fluide

(30) Priorität: 29.01.1999 DE 19905087; 14.04.1999 DE 19916671
(43) Veröffentlichungstag der Anmeldung: 02.08.2000
(73) Patentinhaber: Cegelec Anlagen- und Automatisierungstechnik GmbH & Co KG, 60256 Frankfurt am Main (DE)
(72) Erfinder: Otte, Heinz-Josef, 90530 Wendelstein (DE); Roth, Werner, 91564 Neuendettelsau (DE); Krejtschi, Jürgen, 90478 Nürnberg (DE)
(74) Vertreter: Tergau & Pohl Patentanwälte

(56) Entgegenhaltungen:
- EP-A- 0 461 506
- EP-A- 0 528 622
- EP-A- 0 621 462
- DE-A- 19 718 386
- US-A- 4 505 874
- PATENT ABSTRACTS OF JAPAN vol. 009, no. 117 (M-381), 22. Mai 1985 (1985-05-22) & JP 60 004699 A (AKIHIRO TAKIGUCHI;OTHERS: 01), 11. Januar 1985 (1985-01-11)
- PATENT ABSTRACTS OF JAPAN vol. 010, no. 057 (P-434), 7. März 1986 (1986-03-07) & JP 60 201251 A (MITSUBISHI JUKOGYO KK), 11. Oktober 1985 (1985-10-11)

## Beschreibung

Die Erfindung bezieht sich auf ein Verfahren zum Prüfen eines flüssigkeitsgefüllten Behälters gemäß dem Oberbegriff des Anspruchs 1. Unter Behälter wird hier bei insbesondere ein geschlossener und mit einer Zugangs- oder Besichtigungsöffnung versehener Behälter, insbesondere ein Lagertank, verstanden. Die Erfindung bezieht sich weiter auf eine Prüfeinrichtung zur Durchführung des Verfahrens. Ein derartiges Verfahren und eine solche Einrichtung sind z.B. aus der EP 0 461 506 A1 bekannt.

Zur Prüfung von Behältern, insbesondere von in der chemischen Industrie eingesetzten Lagertanks für chemische Flüssigkeiten, wie z. B. Öl oder Kraftstoff, werden üblicherweise manuelle oder halbautomatische Einrichtungen verwendet. Die Prüfeinrichtungen werden daher entweder mit Hilfe von Magneträdern auf der Außenoberfläche der zu prüfenden Komponente selbst verfahren oder manuell vom Prüfpersonal bedient. Eine Prüfung des Behälter- oder Lagertankbodens ist mit derartigen Einrichtungen jedoch nicht möglich, da der Behälterboden von außen nicht zugänglich ist.

Da derartige Flüssigkeiten in der Regel trübe und somit undurchsichtig sind, können manuelle oder automatische Sichtprüfungen der Behälterinnenwand bei flüssigkeitsgefülltem Behälter nicht durchgeführt werden. Eine derartige Prüfung erfordert daher ein Entleeren des jeweiligen Tanks sowie dessen Säuberung, um einen gefahrlosen Einstieg des Prüfpersonals in den Lagertank über eine sogenannte Mannöffnung oder ein Mannloch zu gewährleisten.

Innerhalb des entsprechenden Behälters oder Lagertanks werden ebenfalls manuelle oder halbautomatische Einrichtungen eingesetzt, die beispielsweise in einem festgelegten Raster entlang der Behälterinnenoberfläche verschoben werden. Dabei erfassen bei der üblicherweise zerstörungsfreien Prüfung Wirbelstromoder Ultraschallsonden die Wanddicke sowie Ungänzen, wie beispielsweise Risse und Korrosionsangriffe, die während des Prüfvorgangs manuell kartographiert werden. Derartige Prüfeinrichtungen werden auch als Floor-Scanner bezeichnet, die manuell bewegt werden und bei Abweichungen von einem vorgegebenen Toleranzband, z. B der Soll-Wanddicke, entsprechende Signale abgeben. Üblicherweise wird sodann an solchen Stellen eine farbige Markierung angebracht und anschließend manuell diese fehlerhafte Stelle, beispielsweise mittels Ultraschall, analysiert.

Wesentlicher Nachteil der bekannten Einrichtungen ist es, dass der Behälter oder Lagertank entleert und gesäubert werden muss, um dem Prüfpersonal den Zugang in den Behälter zu ermöglichen. Diese Vorgänge sind mit hohen Kosten und einem großen Zeitaufwand verbunden.

Aus der DE 197 18 386 A1 sind zudem ein Manipulator und ein Verfahren zum Arbeiten an einem flüssigkeitsgefüllten Behälter bekannt, bei dem der Manipulator zunächst an eine bestimmte Position innerhalb des Behälters geführt und dort mittels sich an der Behälterinnenwand abstützenden Teleskoparmen starr mit Behälter verbunden wird. Zur Positionsbestimmung des Manipulators trägt dieser eine Sensoreinheit, die eine von einer Stelle mit bekannter Position reflektierte Strahlung dedektiert und daraus die Position, insbesondere den Abstand des Manipulators von der Behälterwand, bestimmt.

Ferner ist es aus der EP 0 461 506 A1 bekannt, einen Manipulator in einem mit einer klaren Flüssigkeit gefüllten Behälter zunächst an einer bestimmten Stelle innerhalb des Behälters an dessen Behälterinnenwand durch Ansaugmittel zu fixieren, bevor die eigentliche Prüfmessung vorgenommen wird. Zur Bestimmung des Abstands des Manipulators in dessen lagefixierter Position an der Behälterwand sind an diesem und am Behälter oberhalb dessen zu prüfenden Bereich jeweils ein einzelnes optisches Mittel zur Abstandsmessung vorgesehen.

Der Erfindung liegt daher die Aufgabe zugrunde, ein Verfahren zur Prüfung eines derartigen Behälters, insbesondere eines Lagertanks für Flüssigkeiten, anzuge - ben, das eine Erfassung der Wanddicke, insbesondere auch des Behälterbodens, ohne zuvorige Entleerung des Behälters ermöglicht. Dabei soll das Verfahren auch zur Prüfung der Behälterwandung, insbesondere des Behälterbodens, eines mit einer undurchsichtigen Flüssigkeit befüllten Behälters geeignet sein. Darüber hinaus soll eine zur Durchführung des Verfahrens besonders geeignete Prüfeinrichtung angegeben werden.

Bezüglich des Verfahrens wird diese Aufgabe erfindungsgemäß gelöst durch die Merkmale des Anspruchs 1. Dazu wird ein Manipulator mit einer Anzahl von Prüfsensoren in den Behälter über dessen Behälteröffnung eingeführt und innerhalb der Flüssigkeit entlang eines definierten und zur Behälterwand beabstandeten Bahnverlaufs bewegt. Der Manipulator erfasst von der Behälterwand reflektierte Messsignale, die mit den jeweiligen Ort des Manipulators im Behälterinnenraum angebenden Positionssignalen korreliert werden. Unter Behälterwand wird hierbei insbesondere auch der Behälterboden verstanden.

In vorteilhafter Weiterbildung wird die Wanddicke der Behälterwand, insbesondere des Behälterbodens, während der Bewegung des Manipulators meßtechnisch erfaßt. Der Manipulator bewegt sich während der Messungen vorzugsweise schwebend oder gewichtslos in der Flüssigkeit fort, ohne dabei im Behälter lagefixiert zu sein. Die Positionsbestimmung einerseits und die Bewegungssteuerung des nach Art eines sogenannten Remote Opperated Vehicel (ROV) in der Flüssigkeit femgesteuert verfahrenen Manipulators erfolgt dabei vorzugsweise mittels einer Triangulation. Dabei werden Positionssignale von einer Sende- oder Empfangsvorrichtung erzeugt bzw. empfangen, die ebenfalls in den Behälterinnenraum eingebracht wird.

Zur Triangulationsbestimmung sind mindestens zwei Empfänger oder Sender im Behälterinnenraum vorgesehen, die einerseits einen definierten Abstand zu einem bekannten Bezugspunkt im Behälter und andererseits in einem definierten Abstand zueinander angeordnet sind. Der Manipulator weist dann entweder einen Sender oder einen Empfänger auf. Als Bezugspunkt für die Sende- oder Empfangsvorrichtung wird zweckmäßigerweise die Behälteröffnung oder der Behälter zugang herangezogen, über den die Sende- oder Empfangsvorrichtung in den Behälter eingeführt wird.

Die Bewegung des Manipulators im Behälterinnenraum und innerhalb der Flüssigkeit erfolgt vorteilhafterweise auf definierten, mäanderförmigen Spuren, die anhand der bekannten Behältergeometrie und -abmessungen als Bahnverlauf in Form eines Fahrprogramms dem Manipulator vorgegeben werden. Die Steuerung der Bewegung des Manipulators erfolgt dabei vorteilhafterweise mittels der Positionssignale, anhand derer der Manipulator bei einer Abweichung von dem definierten Verlauf der Bewegungsbahn automatisch auf diese zurückgeführt wird.

Zur Berücksichtigung von Positionierungenauigkeiten, die zu einer Fehlinterpretation des Ortes eines bestimmten Messwertes führen können, werden in vorteilhafter Weiterbildung behälterinterne Markierungen erfasst und zur Ortskorrektur herangezogen. Dazu sind üblicherweise in einem derartigen Behälter vorhandene Schweißnähte oder ähnliche Anschlusskanten zwischen Behälterteilen besonders geeignet. Wesentliches Kriterium bei der Bestimmung derartiger Markierungen ist, dass deren Position innerhalb des Behälters bekannt ist.

Bezüglich der Einrichtung wird die genannte Aufgabe gelöst durch die Merkmale des Anspruchs 6. Vorteilhafte Ausgestaltungen sind Gegenstand der auf diesen rückbezogenen Unteransprüche.

Der zweckmäßigerweise über eine Besichtigungs- oder Zugangsöffnung des Behälters in den Behälter- oder Tankinnenraum eingebrachte Manipulator der Prüfeinrichtung bewegt sich ausgehend von dieser Öffnung, deren Ort an der Behälterwandung bekannt und deren Position somit definiert ist, selbstständig in der Flüssigkeit. Dazu weist der Manipulator eine Anzahl von Antrieben, vorzugsweise Propellerantriebe auf, die ein Verfahren des Manipulators sowohl in vertikaler als auch in horizontaler Richtung ermöglichen. Der Manipulator ist dabei vorzugsweise als Schwimm- oder Tauchkörper ausgebildet und kann derart getrimmt werden, dass dieser in der Flüssigkeit schwebt.

Die Prüfung der Behälterwand durch Messung der Wanddicke erfolgt mittels einer Anzahl von Prüfsensoren, die zweckmäßigerweise in Form von Ultraschall-Sendern vom Manipulator mitgeführt werden. Die Prüfsensoren sind zweckmäßigerweise an einem am Manipulator schwenkbeweglichen Querbalken angeordnet. Alternativ oder zusätzlich kann vom Manipulator auch ein Ultraschall-Gruppenstrahler (phased array) mitgeführt werden, dessen fächerartiger Messstrahl eine Prüfung unterhalb von Hindernissen im Behälterinnenraum und ein Ausmessen von Tiefenausdehnungen oder Profilen von Schadstellen an der Behälterwandung ermöglicht.

Die Triangulation wird einerseits zur Bestimmung der aktuellen Position des Manipulators während dessen Bewegung durch die Flüssigkeit herangezogen. Andererseits dient die Positionserfassung und -bestimmung zur Steuerung des Manipulators entlang der definierten Bahn oder der vorgegebenen Spuren in einer parallel zum Behälterboden oder zur jeweiligen Behälterwand verlaufenden Ebene, deren Abstand zum Behälterboden bzw. zur Behälterwand definiert oder vorgegeben ist. Dazu kommuniziert vorzugsweise ein vom Manipulator mitgeführter Sender mit zwei in definiertem Abstand zueinander und innerhalb des Behälters an bekannten Orten positionierten Empfängern.

Die Prüfung des Behälters auf Schadstellen oder Ungänzen erfolgt durch Messung der Wand- bzw. Bodendicke des Behälters, in dem die Laufzeiten der vom jeweiligen Prüfsensor ausgesendeten und von der Behälteraußenwand einerseits sowie von der Behälterinnenwand andererseits reflektierten Ultraschallwellen erfasst werden. Dabei können die vom Manipulator mitgeführten Prüf- oder Ultraschallsensoren sowohl vertikal als auch horizontal geschwenkt werden. Mittels dieser Ultraschall-Sensoren wird aus einer definierten Entfernung die Behälterwand geprüft, wobei zusätzlich zur Wanddicke auch vorhandene Korrosionsangriffe zuverlässig erfasst werden.

Die während der oder jeder Messung durchgeführte Positionsbestimmung wird zweckmäßigerweise ergänzt durch eine Erfassung der Eintauchtiefe des Manipulators, der dazu einen Drucksensor zur Erfassung des hydrostatischen Druckes in der Flüssigkeit aufweist. Eine ebenfalls vom Manipulator mitgeführte Sonaranlage ermöglicht zudem die Ortung von Hindernissen in Form von Behältereinbauten oder Behälterablagerungen

Die zur Analyse und Auswertung der erfassten Signale und/oder Messdaten vorgesehene Auswertevorrichtung befindet sich während einer Prüfmessung zweckmäßigerweise außerhalb des Behälters und in dessen Nähe. Die Auswertevorrrichtung kann dabei mobil, beispielsweise zusammen mit einer dieser zugeordneten Steuervorrichtung für den Manipulator innerhalb eines Fahrzeugs, angeordnet sein. Zur Auswertung ist zweckmäßigerweise eine Datenverarbeitungs- und Aufzeichnungsanlage vorgesehen, die über eine Kabelverbindung mit Mess- und Steuerleitungen an den sich innerhalb des Behälters bewegenden Manipulator angeschlossen ist.

Die Kabelverbindung ist dabei zweckmäßigerweise über eine Andockvorrichtung oder Schleuse geführt, die auf die entsprechende Zugangsöffnung des Behälters aufgesetzt ist. Die Andockeinrichtung kann mit einem Inertgas zur Überwindung eines sich im Behälterinnenraum bildenden Gaspolsters beaufschlagt sein. Die Andockvorrichtung weist außerdem zweckmäßigerweise einen Kabelspeicher auf, der eine für eine freie Bewegbarkeit des Manipulators innerhalb des Behälters ausreichende Kabellänge und -führung ermöglicht.

Während die Datenverarbeitungsanlage der externen Auswertevorrichtung sowohl die Messsignale des Manipulators als auch die Positionssignale empfängt, werden letztere einer Steuervorrichtung zugeführt, die Teil der Auswertevorrichtung ist. Die Steuervorrichtung enthält das Fahrprogramm, das den Bahnverlauf des Manipulators innerhalb des Behälters vorgibt. Aus anhand der Positionssignale ermittelten Abweichungen des Bahnverlaufs des Manipulators vom Soll-Verlauf oder von dessen Soll-Bahn werden entsprechende Steuersignale generiert und über die Kabelverbindung dem jeweiligen Antrieb des Manipulators zur Durchführung eines Korrekturmanövers zugeführt.

Nachfolgend wird ein Ausführungsbeispiel der Erfindung anhand einer Zeichnung erläutert. Darin zeigen:
- Fig. 1: schematisch eine Prüfeinrichtung mit einem Manipulator an zwei unterschiedlichen Positionen oberhalb des Behälterbodens eines flüssigkeitsgefüllten Lagertanks,
- Fig. 2: einen Ausschnitt aus Fig. 1 in größerem Maßstab mit einem mit Antrieben und Sensoren zur Meß- und Positionserfassung versehenen Manipulator,
- Fig. 3: einen weiteren Ausschnitt aus Fig. 1 in größerem Maßstab mit einer an eine Behälteröffnung angedockten Schleuse mit darin angeordnetem Manipulator,
- Fig. 4a u. 4b: einen entlang einer vertikalen Behälterwand verfahrenen Manipulator in Seitenansicht bzw. dessen Bahnverlauf in Draufsicht, und
- Fig. 5a u. 5b: in Draufsicht einen spiralförmigen bzw. mäanderförmigen Bahnverlauf des Manipulators entlang des Behälterbodens.

Einander entsprechende Teile sind in allen Figuren mit den gleichen Bezugszeichen versehen.

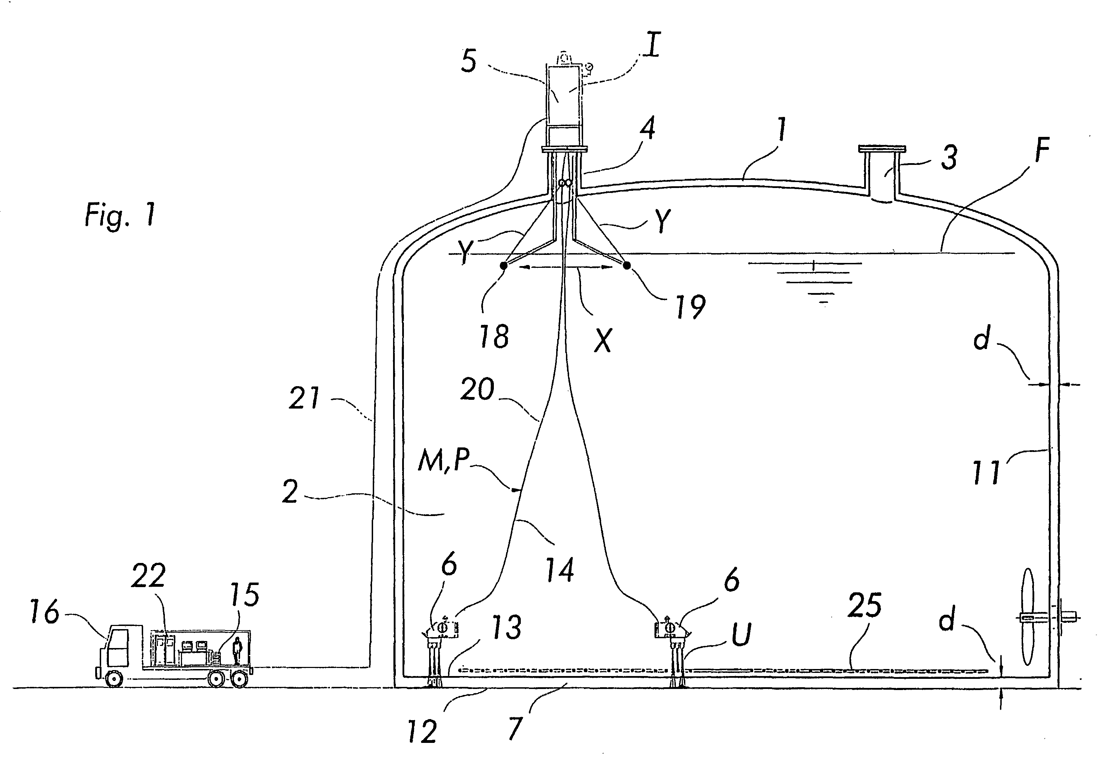

Der in Fig. 1 dargestellte flüssigkeitsbefüllte Behälter 1 ist beispielsweise ein in der chemischen Industrie üblicherweise eingesetzter Lagertank zur Lagerung einer chemischen Flüssigkeit F, wie z. B. Öl. Bei einer derartigen, trüben und somit undurchsichtigen Flüssigkeit F ist eine Sichtprüfung im Behälterinnenraum 2 nicht möglich. Der Behälter 1 weist deckelseitig einen Tankzugang 3 und eine Besichtigungsöffnung 4 auf, auf die eine z. B. mit Inertgas I beaufschlagte Schleuse oder : Andockvorrichtung 5 aufgesetzt ist. Über die Andockvorrichtung 5 wird ein Manipulator 6 in den Behälterinnenraum 2 und dort in die Flüssigkeit F eingesetzt.

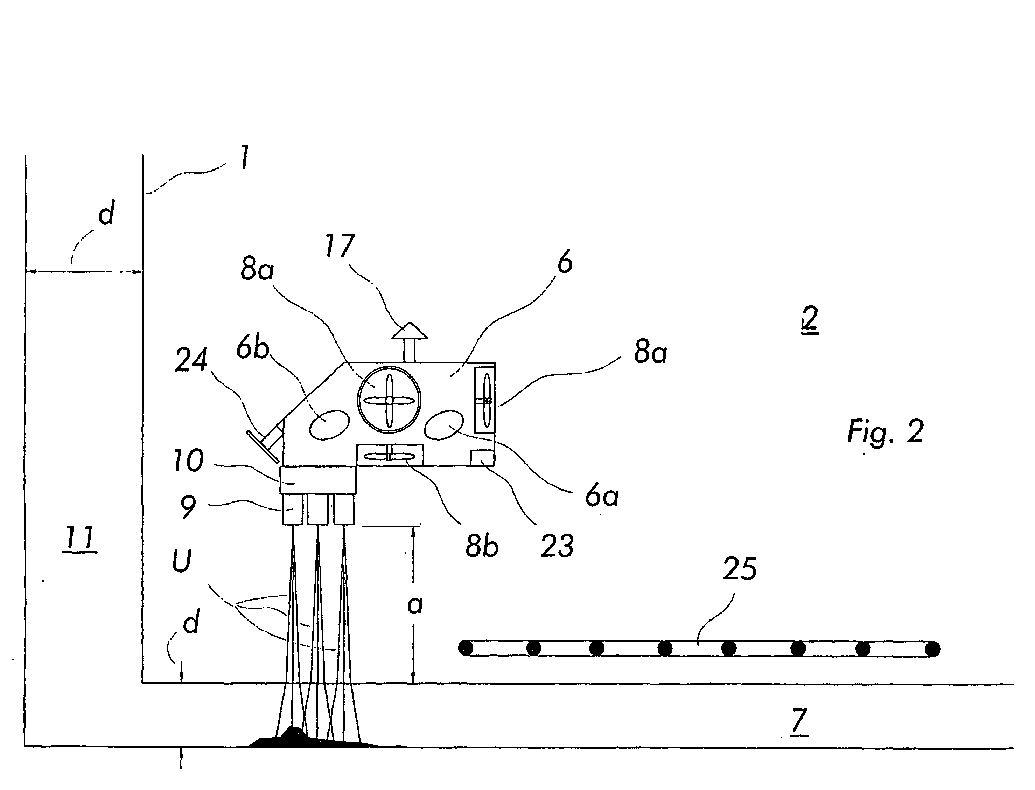

Der in Fig. 1 in einer Ebene oberhalb des Behälterbodens 7 angeordnete und dort an zwei verschiedenen Positionen dargestellte Manipulator 6 wird zur Prüfung der Wandung des Behälterinnenraums 2 auf Fehlstellen, beispielsweise Korrosionsangriffe oder dgl., in einer definierten, vorzugsweise mäanderförmigen Prüfbahn am Behälterboden 7 entlang verfahren. Der Manipulator 6 ist als trimmbarer Schwimm- oder Schwebekörper nach Art eines ROV ausgebildet und somit in der Flüssigkeit F gewichtslos. Zur Fortbewegung des Manipulators 6 in der Flüssigkeit F weist der Manipulator 6 eine Anzahl von Propellerantrieben 8a,8b auf, die aus Fig. 2 vergleichsweise deutlich ersichtlich sind. Mittels dieser Propellerantriebe 8a,8b kann der Manipulator 6 in der horizontalen Ebene bzw. in der Höhe bewegt oder verfahren werden. Die Einstellung des Schwebezustands erfolgt mittels Trimmkörpern 6a,6b, so dass sich der Manipulator 6 praktisch gewichtslos in der Flüssigkeit F fortbewegen kann.

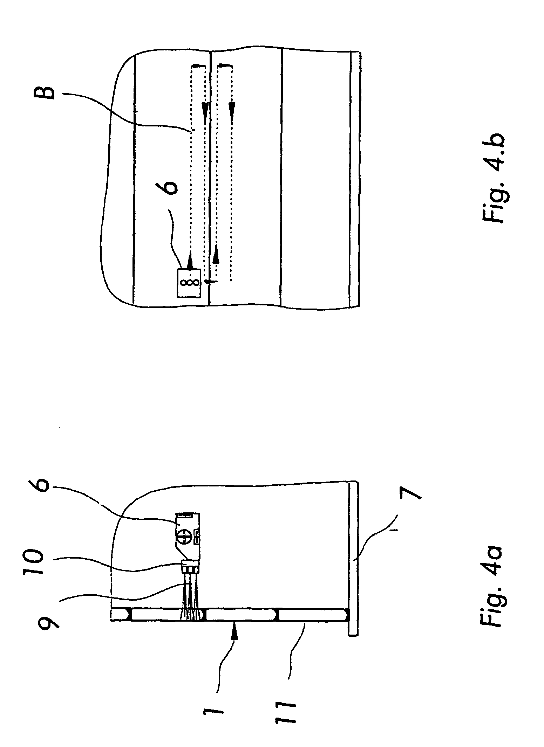

Zur Messung der Wanddicke d, insbesondere des Behälterbodens 7, weist der Manipulator 6 eine Anzahl von Ultraschall-Sensoren 9 auf, die an einem am Manipulator 6 schwenkbeweglich gehaltenen Querholm oder Querbalken 10 angeordnet sind. Zusätzlich oder alternativ kann an dem Querholm 10 auch ein Ultraschall-Gruppenstrahler angeordnet sein. Mittels der Ultraschallsensoren 9 wird die Wanddicke d während des Überfahrens des Behälterbodens 7 anhand des Laufzeitunterschiedes zwischen den von der Wandaußenoberfläche 12 und der Wandinnenoberfläche 13 reflektierten Ultraschallwellen U erfasst. Analog kann auch die Wanddicke oder -stärke d der vertikalen Behälterwand 11 gemessen werden, wie dies aus Figur 4a ersichtlich ist. Die entsprechenden Messsignale M werden über eine Messsignalleitung 14 an eine Auswertevorrichtung 15 übertragen, die außerhalb des Behälters 1 in einem Prüffahrzeug 16 angeordnet ist.

Gleichzeitig wird die jeweilige Position des Manipulators 6 mittels einer Triangulation on-line und beispielsweise relativ zur Besichtigungsöffnung 4 ermittelt. Dazu weist der Manipulator 6 einen Sender 17, insbesondere einen Ultraschall-Sender, auf, dessen Signale von zwei im Behälterinnenraum 2 angeordneten Empfängern 18,19, insbesondere Ultraschall-Empfängern, empfangen werden. Die in die Flüssigkeit F eintauchenden Empfänger 18,19 weisen zueinander sowie zur Besichtigungsöffnung 4 einen definierten Abstand x bzw. y auf, so dass die Position des Manipulators 6 bezüglich der Behälteröffnung 4 bestimmt werden kann. Die entsprechenden Positionssignale P werden über eine Steuerleitung 20, die zusammen mit der Messleitung 14 in einer den Manipulator 6 mit dem Prüffahrzug 16 verbindenden Kabelleitung 21 verlaufen, an das Prüffahrzeug 16 übertragen.

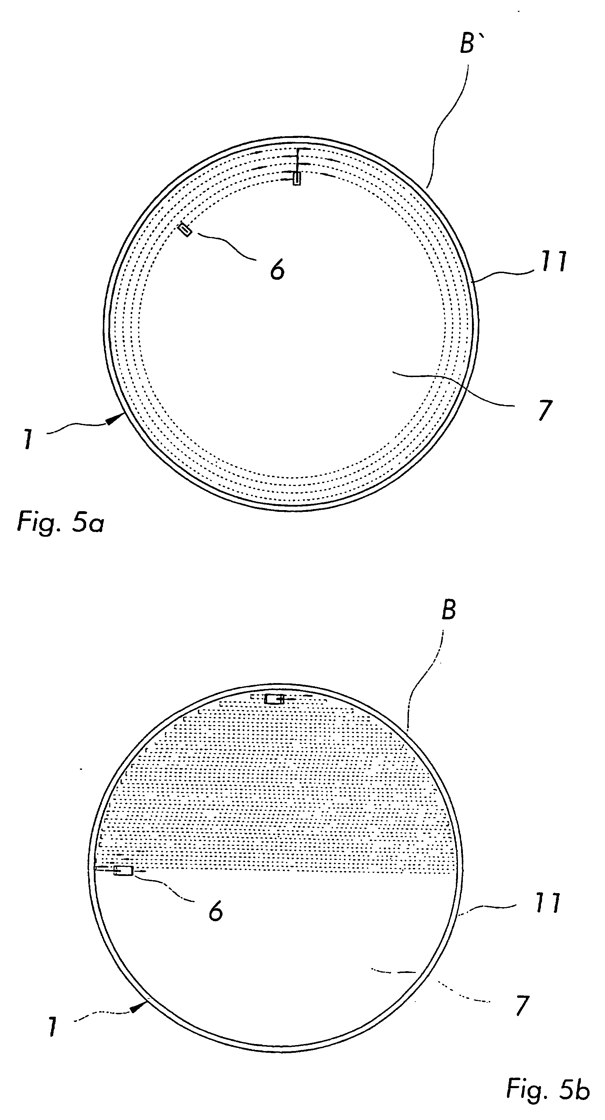

Die Positionssignale P werden dabei einerseits der Auswerteeinrichtung 15 und andererseits einer dieser zugeordneten Steuerungsvorrichtung 22 zugeführt, die ebenfalls vom Prüffahrzeug 16 mitgeführt ist. Die Steuerungsvorrichtung 22 gibt dem Manipulator 6 ein Fahrprogramm vor, das den jeweiligen Bahnverlauf B,B' des Manipulators 6 innerhalb der Flüssigkeit F bestimmt (Fig. 4b sowie Fig. 5a und 5b). Die Positionssignale P werden dann zur Fernsteuerung und zur Ortskorrektur des Manipulators 6 herangezogen, wenn dieser vom vorgegebenen Bahnverlauf B,B' abweicht. Durch diese Positionsbestimmung und -steuerung wird eine Bewegung des Manipulators 6 auf beliebigen Bahnen B,B' oder Spuren in einem definierten Abstand a zur jeweiligen Tankwand 7,11 ermöglicht. Die Funktionen der Empfänger 18,19 einerseits und des vom Manipulator 6 mitgeführten Senders 17 andererseits können auch ausgetauscht sein, so dass der Manipulator einen Empfänger mitführt, während die ortsfesten Vorrichtungen 18,19 dann die Sender sind.

Bevorzugte Bahnverläufe B,B' zeigen die Figuren 4b und 5 für eine Messung der Wanddicke d der Behälterwand 11 bzw. des Behälterbodens 7. Während der Bahnverlauf B entlang der Behälterwand 11 vorzugsweise mäanderförmig ist, kann die Messung der Wanddicke d des Behälterbodens 7 sowohl in einer mäanderförmigen Bahn B (Fig. 5b) als auch in einer in konzentrischen Kreisen verlaufenden, d. h. schraubenlinienartigen oder spiralförmigen Bahn B' erfolgen (Fig. 5a). Ein spiralförmiger Bahnverlauf B' ist auch bei der Messung der Behälterwand 11 vorgebbar.

Zusätzlich zur Triangulation gibt ein vom Manipulator 6 mitgeführter Drucksensor 23 Informationen über die Eintauchtiefe des Manipulators 6 in der Flüssigkeit F an die Auswerte- und/oder Steuerungsvorrichtung 15,22 ab. Ein weiteres vom Manipulator 6 mitgeführtes Sensorsystem in Form einer Sonaranlage 24 dient zur Erkennung von Behältereinbauten oder Strukturteilen, wie beispielsweise einer oberhalb des Behälterbodens 7 verlaufenden Heizschlange oder -schlaufe 25 sowie im Behälterinnenraum 2 liegender Teile.

Die von den verschiedenen Sensoren 9,17,23 und 24 erfassten Signale M werden zusammen mit den Positionssignalen P von der Auswerteeinrichtung 15,22 erfasst und von einer Datenverarbeitungs- und Aufzeichnungsanlage analysiert sowie dort gespeichert. Dabei werden die Messsignale M mit den Positionssignalen P korreliert, so dass dem jeweiligen Messpunkt oder Messort die entsprechende Position innerhalb des Behälters 1 zugeordnet ist. Die aufgenommenen Daten werden on-line und/oder off-line einer statistischen Analyse zugeführt, wobei die größte und kleinste Wanddicke d sowie die Anzahl, die Orte und die Flächen der Wanddickenunterschreitungen ermittelt werden. Die Analyseergebnisse werden vorzugsweise in einer farbgraphischen Darstellung derart aufbereitet, dass eine Zuordnung zum jeweiligen Fehlerort hergestellt ist und Defekte durch spezielle Farben, z. B. durch rote Markierungen, auf einer Projektion auf z. B. den Behälterboden 7 ortsrichtig dargestellt sind. Dies ist für ggf. vorzunehmende Reparaturen zweckdienlich. Außerdem können Ergebnisse verschiedener Prüffahrten miteinander verglichen werden.

Für den Fall, dass eine durch die Triangulation bestimmte Ortung des jeweiligen Messortes im Zentimeterbereich eine unzureichende Auflösung darstellt, können zusätzlich behälterinterne, systemimmanente Markierungen, wie beispielsweise Schweißnähte oder andere behältercharakteristische Teile, zur Ortskorrektur herangezogen werden.

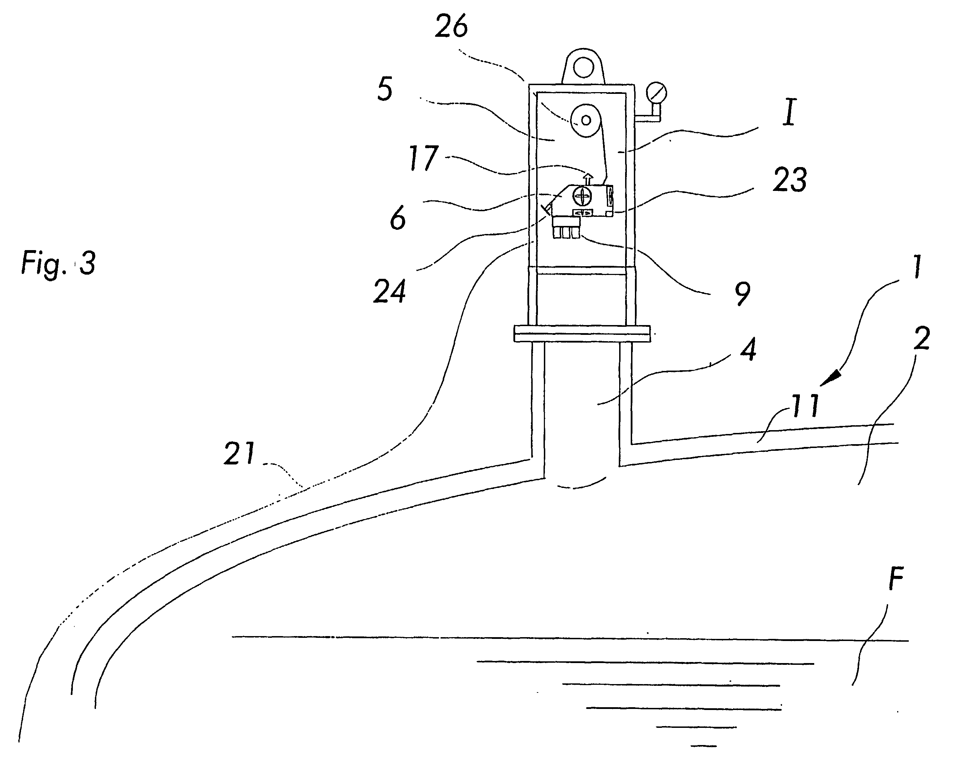

Wie aus Fig. 3 ersichtlich ist, wird der Manipulator 6 über die Schleuse 5 in den Behälterinnenraum 2 eingeführt. Eine dort angeordnete Kabelrolle 26 dient als Kabelspeicher für die Kabelverbindung oder -leitung 21, über die der Manipulator 6 mit dem Prüffahrzeug 16 verbunden ist.

### Bezugszeichenliste

- 1: Behälter/Lagertank
- 2: Behälterinnenraum
- 3: Tankzugang
- 4: Besichtigungsöffnung
- 5: Schleuse
- 6: Manipulator
- 6a,b: Trimmkörper
- 7: Behälterboden
- 8a,b: Antrieb
- 9: Prüfsensor
- 10: Querholm
- 11: Behälterwand
- 12,13: Wandoberfläche
- 14: Messleitung
- 15: Auswertevorrichtung
- 16: Prüffahrzeug
- 17: Positionssensor
- 18,19: Sende-/Empfangsvorrichtung
- 20: Prüfleitung
- 21: Kabelverbindung
- 22: Steuerungsvorrichtung
- 23: Drucksensor
- 24: Sonaranlage
- 25: Heizschlange
- 26: Kabelrolle/-speicher

- a,x,y: Abstand
- d: Wanddicke

- B,B': Bahn/-verlauf
- F: Flüssigkeit
- I: Inertgas
- U: Ultraschall/-welle

## Patentansprüche

1. Verfahren zum Prüfen eines flüssigkeitsgefüllten Behälters (1), bei dem ein eine Anzahl von Prüfsensoren (9,17,23,24) aufweisender Manipulator (6) in der Flüssigkeit (F) bewegt wird, und bei dem von der Behälterwand (7,11) reflektierte und vom Manipulator (6) empfangene Meßsignale (M) mit Positionssignalen (P) korreliert werden,
**dadurch gekennzeichnet,**
- **dass** der Manipulator (6) zur Positionsbestimmung einen Sensor (17) mitführt, der Positionssignale (P) empfängt, die von mindestens zwei in einem definierten Abstand (x) zueinander und im Behälterinnenraum (2) an definierten Positionen angeordneten Sende- oder Empfangseinrichtungen (18,19) erzeugt werden, und
- **dass** der Manipulator (6) auf einer definierten Bahn (B,B') und zur Behälterwand (7,11) beabstandet an dieser entlang bewegt wird.

2. Verfahren nach Anspruch 1, bei dem die Bewegung des Manipulators (6) entlang der definierten Bahn (B,B') anhand der Positionssignale (P) gesteuert wird.

3. Verfahren nach Anspruch 1 oder 2, bei dem der Manipulator (6) und die oder jede Sende- und Empfangseinrichtung (18,19) in den Behälterinnenraum (2) durch eine Behälteröffnung (4) eingeführt wird, zu der in definiertem Abstand (y) die jeweilige Sende- und Empfangseinrichtung (18,19) positioniert wird.

4. Verfahren nach einem der Ansprüche 1 bis 3, bei dem mittels Ultraschall die Wanddicke (d) des Behälters (1), insbesondere des Behälterbodens (7), geprüft wird.

5. Verfahren nach einem der Ansprüche 1 bis 4, bei dem behälterinterne Markierungen erfaßt und zur Ortskorrektur der mit den Positionssignalen (P) korrelierten Meßsignale (M) herangezogen werden.

6. Einrichtung zur zerstörungsfreien Prüfung eines flüssigkeitsgefüllten Behälters (1), mit einem ferngesteuerten Manipulator (6), der einen Antrieb (8) und eine Anzahl von Prüfsensoren (9) aufweist,
**gekennzeichnet durch**
- mindestens zwei in definiertem Abstand (x) zueinander und im Behälterinnenraum (2) an definierten Positionen angeordnete Sende- oder Empfangsvorrichtungen (18,19),
- einen vom Manipulator (6) mitgeführten Positionssensor (17), der von den Sende- bzw. Empfangsvorrichtungen (18,19) Positionssignale (P) empfängt, und
- eine Auswertevorrichtung (15,22), die anhand von mittels der Prüfsensoren (9) erfaßten und mit den Positionssignalen (P) korrelierten Meßsignalen (M) den Zustand der oder jeder Behälterwand (7,11) positionsgenau ermittelt.

7. Einrichtung nach Anspruch 6, bei der ein erster Antrieb (8a) zur Bewegung des Manipulators (6) in horizontaler Richtung und ein zweiter Antrieb (8b) zu dessen Bewegung in vertikaler Richtung vorgesehen sind.

8. Einrichtung nach Anspruch 6 oder 7, bei der die Prüfsensoren (9) schwenkbar am Manipulator (6) angeordnet sind.

9. Einrichtung nach einem der Ansprüche 6 bis 8, bei der der Manipulator (6) eine Sonaranlage (24) zur Ortung von behälterinternen Hindernissen (25) aufweist.

10. Einrichtung nach einem der Ansprüche 6 bis 9, mit einer auf eine Behälteröffnung (4) aufsetzbaren Schleuse (5), über die der Manipulator (6) sowie die Sende- und/oder Empfangseinrichtungen (18,19) in den Behälter (2) einbringbar sind.

11. Einrichtung nach einem der Ansprüche 6 bis 10, bei der ein Ultraschallgruppenstrahler als Prüfsensoren (9) vorgesehen ist.

12. Einrichtung nach einem der Ansprüche 6 bis 11, bei der ein Sender als Positionssensor (17) vorgesehen ist.

13. Einrichtung nach einem der Ansprüche 6 bis 12, bei der am Manipulator (6) ein Drucksensor (23) angeordnet ist.

14. Einrichtung nach einem der Ansprüche 6 bis 13, bei der der Manipulator (6) Trimmmittel (6a,6b) aufweist, mit denen ein Schwebezustand des Manipulators (6) in der Flüssigkeit (F) einstellbar ist.

15. Einrichtung nach einem der Ansprüche 6 bis 14, bei der der Manipulator (6) über eine Meß- und/oder Steuerleitungen (14,20) umfassende Kabelverbindung (21) an die außerhalb des Behälters (2) vorgesehene Auswertevorrichtung (15,22) angeschlossen ist.

## Claims

1. Method for testing a fluid-filled tank (1), in which a manipulator (6) having a number of test sensors (9, 17, 23, 24) is moved in the fluid (F), and in which measured signals (M) reflected from the tank wall (7, 11) and received by the manipulator (6) are correlated with position signals (P),
**characterized**
- **in that**, for position determination, the manipulator (6) carries with it a sensor (17) which receives position signals (P) which are generated by at least two transmitting or receiving devices (18, 19) arranged at a defined distance (x) from each other and at defined positions in the interior (2) of the tank, and
- **in that** the manipulator (6) is moved along the tank wall (7, 11) on a defined path (B, B') and at a distance from the latter.

2. Method according to Claim 1, in which the movement of the manipulator (6) along the defined path (B, B') is controlled by using the position signals (P).

3. Method according to Claim 1 or 2, in which the manipulator (6) and the or each transmitting and receiving device (18, 19) is inserted into the interior (2) of the tank through a tank opening (4) in relation to which the respective transmitting and receiving device (18, 19) is positioned at a defined distance (y).

4. Method according to one of Claims 1 to 3, in which the wall thickness (d) of the tank (1), in particular of the tank base (7), is tested by means of ultrasound.

5. Method according to one of Claims 1 to 4, in which markings internal to the tank are registered and are used to correct the location of the measured signals (M) correlated with the position signals (P).

6. Device for the non-destructive testing of a fluid-filled tank (1), having a remotely controlled manipulator (6) which has a drive (8) and a number of test sensors (9),
**characterized by**
- at least two transmitting or receiving devices (18, 19) arranged at a defined distance (x) from each other and at defined positions in the interior (2) of the tank,
- a position sensor (17) which is carried along by the manipulator (6) and receives position signals (P) from the transmitting and receiving devices (18, 19), and
- an evaluation device (15, 22) which, by using measured signals (M) acquired by means of the test sensors (9) and correlated with the position signals (P), determines the state of the or each tank wall (7, 11) in a positionally accurate manner.

7. Device according to Claim 6, in which a first drive (8a) is provided for moving the manipulator (6) in the horizontal direction, and a second drive (8b) is provided for its movement in the vertical direction.

8. Device according to Claim 6 or 7, in which the test sensors (9) are arranged on the manipulator (6) such that they can be pivoted.

9. Device according to one of Claims 6 to 8, in which the manipulator (6) has a sonar system (24) for locating obstacles (25) internal to the tank.

10. Device according to one of Claims 6 to 9, having an airlock (5) which can be placed on a tank opening (4) and via which the manipulator (6) and the transmitting and/or receiving devices (18, 19) can be introduced into the tank (2).

11. Device according to one of Claims 6 to 10, in which an ultrasonic group radiator is provided as test sensors (9).

12. Device according to one of Claims 6 to 11, in which a transmitter is provided as position sensor (17).

13. Device according to one of Claims 6 to 12, in which a pressure sensor (23) is arranged on the manipulator (6).

14. Device according to one of Claims 6 to 13, in which the manipulator (6) has trimming means (6a, 6b) with which a floating state of the manipulator (6) in the fluid (F) can be established.

15. Device according to one of Claims 6 to 14, in which the manipulator (6) is connected to the evaluation device (15, 22) provided outside the tank (2) via a cable connection (21) comprising measuring and/or control lines (14, 20).

## Revendications

1. Procédé pour tester un récipient (1) rempli d'un liquide, selon lequel un manipulateur (6) possédant un certain nombre de capteurs de test (9, 17, 21, 24) est déplacé dans le liquide (F) et selon lequel les signaux de mesure (M) réfléchis par la paroi (7, 11) du récipient et reçus par le manipulateur (6) sont corrélés à des signaux de position (P), **caractérisé en ce que**
- que le manipulateur (6) entraîne, pour la détermination de position, un capteur (17) qui reçoit des signaux de position (P), qui sont produits par au moins deux dispositifs d'émission ou de réception (18, 19), qui sont disposés à une distance réciproque définie (x) et dans des positions définies dans l'espace intérieur (2) du récipient, et
- que le manipulateur (6) est déplacé sur une trajectoire définie (B, B') et le long de la paroi (7, 11) du récipient à distance de ce dernier.

2. Procédé selon la revendication 1, selon lequel le déplacement du manipulateur (6) le long de la trajectoire définie (B, B') est commandé sur la base des signaux de position (P).

3. Procédé selon la revendication 1 ou 2, selon lequel le manipulateur (6) et le ou chaque dispositif d'émission et réception (18, 19) sont introduits dans l'espace intérieur (2) du récipient par une ouverture (4) de ce dernier, à une distance définie (y) de laquelle est positionné le dispositif respectif d'émission et de réception (18, 19).

4. Procédé selon l'une des revendications 1 à 3, selon lequel l'épaisseur de paroi (d) du récipient (1), notamment du fond (7) du récipient, est testée à l'aide d'ultrasons.

5. Procédé selon l'une des revendications 1 à 4, dans lequel les marquages internes au récipient sont détectés et sont utilisés pour la correction d'emplacement des signaux de mesure (M) corrélés aux signaux de position (P).

6. Dispositif de test non destructif d'un récipient (1) rempli par un liquide, comportant un manipulateur télécommandé (6), qui possède un dispositif d'entraînement (8) et un nombre de capteurs de test (9),
**caractérisé par**
- au moins deux dispositif d'émission ou de réception (18, 19) qui sont disposés à une distance réciproque définie (x) et dans des positions définies dans l'espace intérieur (2) du récipient,
- un capteur de position (17) entraîné conjointement par le manipulateur (6) et qui reçoit des signaux de position (P) provenant des dispositifs d'émission ou de réception (18, 19), et
- un dispositif d'évaluation (15, 22) qui détermine, d'une manière précise du point de vue position, l'état de la ou de chaque paroi (7, 11) du récipient, au moyen de signaux de mesure (M) détectés par les capteurs de test (9) et corrélés aux signaux de position (P).

7. Dispositif selon la revendication 6, dans lequel il est prévu un premier dispositif d'entraînement (8a) servant à déplacer le manipulateur (6) dans une direction horizontale et un second dispositif d'entraînement, (8b) pour son déplacement dans une direction verticale.

8. Dispositif selon la revendication 6 ou 7, dans lequel les capteurs de test (9) sont disposés de manière à pouvoir pivoter sur le manipulateur (6).

9. Dispositif selon l'une des revendications 6 à 8, dans lequel le manipulateur (6) comporte une installation sonar (24) pour localiser des obstacles (25) situés à l'intérieur du récipient.

10. Dispositif selon l'une des revendications 6 à 9, comportant un sas (5) qui peut être monté sur une ouverture (4) du récipient et au moyen duquel le manipulateur (6) ainsi que les dispositifs d'émission et/ou de réception (18, 19) peuvent être insérés dans le récipient (2).

11. Dispositif selon l'une des revendications 6 à 10, dans lequel un émetteur de groupe à ultrasons est prévu en tant que capteurs de test (9).

12. Dispositif selon l'une des revendications 6 à 11, dans lequel un émetteur est prévu en tant que capteur de position (17).

13. Dispositif selon l'une des revendications 6 à 12, dans lequel un capteur de pression (23) est disposé sur le manipulateur (6).

14. Dispositif selon l'une des revendications 6 à 13, dans lequel le manipulateur (6) comporte des moyens de réglage (6a, 6b), à l'aide desquels un état flottant du manipulateur (7) dans le liquide (F) est réglable.

15. Dispositif selon l'une des revendications 6 à 14, dans lequel le manipulateur (6) est raccordé par l'intermédiaire d'un connecteur de câble (21), qui comprend des lignes de mesure et/ou de commande (14, 20) au dispositif d'évaluation (15, 22) prévu à l'extérieur du récipient (2).
